# EUROPEAN PATENT SPECIFICATION

(11) **EP 3 451 577 B1**
(45) Date of publication and mention of the grant of the patent: **17.02.2021**
(21) Application number: 17789212.2
(22) Date of filing: 06.04.2017
(51) Int. Cl.: H04L 9/32, G09C 1/00, H04L 9/12, H04L 9/00, H04L 12/40

(54) **COMPUTING DEVICE, AUTHENTICATION SYSTEM, AND AUTHENTICATION METHOD**
DATENVERARBEITUNGSVORRICHTUNG, AUTHENTIFIZIERUNGSSYSTEM UND AUTHENTIFIZIERUNGSVERFAHREN
DISPOSITIF INFORMATIQUE, SYSTÈME ET PROCÉDÉ D'AUTHENTIFICATION

(30) Priority: 27.04.2016 JP 2016089032
(43) Date of publication of application: 06.03.2019
(73) Proprietor: Hitachi Automotive Systems, Ltd., Hitachinaka-shi, Ibaraki 312-8503 (JP)
(72) Inventor: MORITA, Nobuyoshi, Tokyo 100-8280 (JP); IDEGUCHI, Kouta, Tokyo 100-8280 (JP); KAYASHIMA, Makoto, Tokyo 100-8280 (JP)
(74) Representative: Mewburn Ellis LLP
(86) International application number: PCT/JP2017/014369
(87) International publication number: WO 2017/187924

(56) References cited:
- WO-A1-2015/182103
- WO-A1-2017/026360
- WO-A1-2017/026361
- JP-A- H10 290 223
- JP-A- 2009 508 390
- JP-A- 2012 169 829
- Anthony Van Herrewege ET AL: "CANAuth -A Simple, Backward Compatible Broadcast Authentication Protocol for CAN bus", ECRYPT Workshop on Lightweight Cryptography 2011, 1 January 2011 (2011-01-01), XP055329446, Retrieved from the Internet: URL:https://www.esat.kuleuven.be/cosic/pub lications/article-2086.pdf [retrieved on 2016-12-15]
- CHUNG-WEI LIN ET AL: "Cyber-Security for the Controller Area Network (CAN) Communication Protocol", CYBER SECURITY (CYBERSECURITY), 2012 INTERNATIONAL CONFERENCE ON, IEEE, 14 December 2012 (2012-12-14), pages 1-7, XP032429508, DOI: 10.1109/CYBERSECURITY.2012.7 ISBN: 978-1-4799-0219-4
- ROBERT BOSCH GMBH: "CAN specification, Version 2.0", BOSCH CAN SPECIFICATION VERSION 2.0, XX, XX, 1 January 1991 (1991-01-01), pages 1-69, XP002346344,
- RYO KURACHI: "Message Ninsho o Mochiita CAN no Shuchu Kanshi System", The Transactions of the Institute of Electronics, Information and Communication Engineers A, vol. J99-A, no. 2, 1 February 2016 (2016-02-01), pages 118-130, XP009516415,

## Description

### Technical Field

The present invention relates to an arithmetic device, an authentication system, and an authentication method.

### Background Art

A controller area network (hereinafter, CAN) has become widespread as a communication protocol in an in-vehicle network of an automobile. Such an in-vehicle network has a risk that an unauthorized device is connected to an interface directly connected to the in-vehicle network, such as an on-board-diagnostics 2 (OBD 2) port, and an unauthorized message is transmitted to the in-vehicle network. At this time, the CAN does not have a field indicating a transmission source (source address), easily undergoes spoofing, and is particularly vulnerable to a replay attack. Here, the replay attack is an attack eavesdropping a message flowing on a communication line and acquiring the message in advance, and retransmitting the acquired message to cause unauthorized operation. PTL 1 discloses a configuration to transmit a message authentication code (MAC) message including a main message and a MAC of the main message to prevent falsification of the message. PTL 1 further discloses a configuration to store a counter value incremented every time the main message is transmitted on a network, and generate the MAC, applying a predetermined algorithm to the main message and the counter value to prevent a replay attack. Anthony Van Herrewege ET AL: "CANAuth - A Simple, Backward Compatible Broadcast Authentication Protocol for CAN bus", ECRYPT Workshop on Lightweight Cryptography 2011, 1 January 2011 proposes a message authentication protocol, CANAuth, that meets the requirements of the CAN bus. CHUNG-WEI LIN ET AL: "Cyber-Security for the Controller Area Network (CAN) Communication Protocol", CYBER SECURITY (CYBERSECURITY), 2012 INTERNATIONAL CONFERENCE ON, IEEE, 14 December 2012 proposes a security mechanism to prevent cyber-attacks in vehicles with architectures based on CAN. ROBERT BOSCH GMBH: "CAN specification, Version 2.0" BOSCH CAN SPECIFICATION VERSION 2.0, XX, XX, 1 January 1991 proposes a serial communications protocol.

### Citation List

### Patent Literature

PTL 1: JP 5770602 B2

### Summary of Invention

### Technical Problem

The invention described in PTL 1 cannot correctly verify a message if counter values become asynchronous from each other between devices.

### Solution to Problem

According to a first aspect of the present invention, an arithmetic device includes a communication unit configured to receive a message including a reception authentication code, a storage unit configured to store a key, and a message verification unit configured to generate a generation authentication code, using the key, for data to be verified including data excluding at least the reception authentication code from the message received by the communication unit, a first counter value updated in response to reception of the message and initialized at a time when an abnormality regarding transmission/reception of the message occurs, and a second counter value updated at a time when the abnormality occurs, and to verify the message according to whether the reception authentication code and the generation authentication code match.

According to a second aspect of the present invention, an arithmetic device includes a communication unit configured to transmit a message, an abnormality detection unit configured to detect an abnormality regarding transmission/reception of the message, a storage unit configured to store a first counter updated in response to transmission of the message and initialized at a time when the abnormality detection unit detects the abnormality, a second counter updated at a time when the abnormality detection unit detects the abnormality, and a key, and a verification information generation unit configured to generate a generation authentication code, using the key, for data to be verified including a value of the first counter and a value of the second counter, in which the communication unit transmits the message including the generation authentication code generated by the verification information generation unit.

According to a third aspect of the present invention, an authentication system is an authentication system including a first arithmetic device and a second arithmetic device connected by a network, the first arithmetic device including a first communication unit configured to transmit a message, an abnormality detection unit configured to detect an abnormality regarding transmission/reception of the message, a first storage unit configured to store a first counter updated in response to transmission of the message and initialized at a time when the abnormality detection unit detects the abnormality, a second counter updated at a time when the abnormality detection unit detects the abnormality, and a key, and a verification information generation unit configured to generate a first authentication code, using the key, for data to be verified including a value of the first counter and a value of the second counter, in which the first communication unit transmits the message including the first authentication code generated by the verification information generation unit, and the second arithmetic device including a second communication unit configured to receive the message including the first authentication code, a second storage unit configured to store the key, and a message verification unit configured to generate a second authentication code, using the key, for data to be verified including data excluding at least the first authentication code from the message received by the second communication unit, a third counter value updated in response to reception of the message and initialized at a time when the abnormality occurs, and a fourth counter value updated at a time when the abnormality occurs, and to verify the message according to whether the first authentication code and the second authentication code match.

According to a fourth aspect of the present invention, an authentication method is an authentication method executed in a first arithmetic device and a second arithmetic device connected by a network, the method including, by the first arithmetic device including a first storage unit configured to store a first counter updated in response to transmission of a message and initialized at a time when an abnormality regarding transmission/reception of the message is detected, a second counter updated at a time when an abnormality regarding transmission/reception of the message is detected, and a key, generating a first authentication code, using the key, for first data to be verified including a value of the first counter and a value of the second counter, and transmitting the message including the generated first authentication code, and by the second arithmetic device including a second storage unit configured to store the key, receiving the message including the first authentication code, and generating a second authentication code, using the key, for second data to be verified including data excluding at least the first authentication code from the received message, a third counter value updated in response to reception of the message and initialized at a time when the abnormality regarding transmission/reception of the message occurs, and a fourth counter value updated at a time when the abnormality occurs, and verifying the message according to whether the first authentication code and the second authentication code match.

### Advantageous Effects of Invention

According to the present invention, a message can be verified even when the communication counters become asynchronous from each other between devices.

### Brief Description of Drawings

[FIG. 1] FIG. 1 is a diagram illustrating a configuration of an ECU.
[FIG. 2] FIG. 2 is a diagram illustrating an example of abnormality detection related information.
[FIG. 3] FIG. 3 is a diagram illustrating an example of an abnormality counter.
[FIG. 4] FIG. 4 is a diagram illustrating an example of a communication counter.
[FIG. 5] FIG. 5(a) is a diagram illustrating a data structure of a control message, FIG. 5(b) is a diagram illustrating a data structure of a synchronization request message, and FIG. 5(c) is a diagram illustrating a data structure of a synchronization completion message.
[FIG. 6] FIG. 6 is a diagram illustrating an authentication sequence at a normal time.
[FIG. 7] FIG. 7 is a diagram illustrating a synchronization sequence at the time of abnormality detection.
[FIG. 8] FIG. 8 is a flowchart illustrating processing of a transmission-side ECU in the synchronization sequence.
[FIG. 9] FIG. 9 is a flowchart illustrating processing of a reception-side ECU in the synchronization sequence.
[FIG. 10] FIG. 10 is a diagram illustrating a configuration of a host ECU according to a second embodiment.
[FIG. 11] FIG. 11 is a diagram illustrating a synchronization sequence in the second embodiment.

### Description of Embodiments

### (First Embodiment)

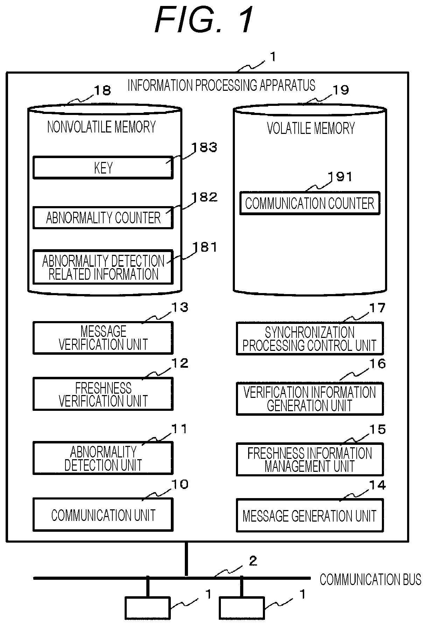

Hereinafter, a first embodiment of an electronic control unit (hereinafter, ECU) that is an embodiment of an information processing apparatus according to the present invention will be described with reference to FIGS. 1 to 9. For example, a plurality of the ECUs is installed in a vehicle, and these ECUs are connected to one another via a CAN in the vehicle. The respective ECUs have different functions, for example, an engine speed control function and a power window opening/closing function, but configurations and functions described below are common to the ECUs. Hereinafter, the unique functions of the respective ECUs are executed by a control unit (not illustrated), and the configurations and functions common to the ECUs will be mainly described.

### (MAC)

In the present embodiment, a message authentication code, that is, a MAC is generated using "data to be authenticated" and a "key". In general, the "data to be authenticated" and the MAC generated for the "data to be authenticated" are transmitted as a set. However, in the present embodiment, data that lacks some formation of the "data to be authenticated" and the MAC generated for the "data to be authenticated" are transmitted. Note that the "data to be authenticated" is also called "message", but in the present specification, the "data to be authenticated" is used to avoid confusion with CAN messages.

### (Structure of Message)

A message transmitted/received in the CAN network is composed of a header in which a CAN-ID indicating a type of the message is stored, and a payload that is content of the message. In other words, the remainder obtained by excluding the header from the message is the payload.

In the present embodiment, types of the message transmitted by the ECU include a normal message, a synchronization request message, and a synchronization completion message. When a message transmitted from one ECU is received by another ECU, the other ECU determines the type of the received message according to the CAN-ID stored in the header. Hereinafter, the CAN-ID stored in the header of the synchronization request message is called synchronization request ID, and the CAN-ID stored in the header of the synchronization completion message is called synchronization completion ID. The synchronization request ID and the synchronization completion ID are predetermined, and information of the synchronization request ID and the synchronization completion ID is shared among all the ECUs. In the present embodiment, each ECU uses the same synchronization request ID and the same synchronization completion ID. Meanwhile, in the header of the normal message, a CAN-ID unique to the ECU that transmits the message (hereinafter, the CAN-ID is referred to as management object ID) is stored. For example, an ECU, which wishes to acquire speed information of the vehicle from the CAN, acquires from the CAN a message with a header including the management object ID of the ECU that outputs the speed information of the vehicle to the CAN.

FIG. 1 is a diagram illustrating a configuration commonly provided in a plurality of ECUs 1. The ECUs 1 are connected with one another via a communication bus 2 as the CAN, for example, and transmit/receive messages (also called frames) to/from one another. That is, the ECU 1 has both a transmission function and a reception function. The structure of the message will be described below.

The ECU 1 includes a CPU (not illustrated), a ROM (not illustrated), a communication unit 10, a nonvolatile memory 18, and a volatile memory 19. The ECU 1 includes, as logical configurations, an abnormality detection unit 11, a freshness verification unit 12 that verifies freshness of a received message, a message verification unit 13 that verifies integrity of the received message, a message generation unit 14 that generates a message, a freshness information management unit 15 that manages an abnormality counter 182 and a communication counter 191, a verification information generation unit 16 that generates a MAC to be included in a message to be transmitted, and a synchronization processing control unit 17. These logical configurations of the ECU 1 are realized by the CPU executing a program stored in the ROM (not illustrated).

The communication unit 10 is, for example, a CAN interface. The communication unit 10 transmits a message to the communication bus 2 and receives a message from the communication bus 2. The nonvolatile memory 18 is, for example, a flash memory. Even if power is lost, information stored in the nonvolatile memory 18 is held. The nonvolatile memory 18 stores abnormality detection related information 181 in which rules necessary for abnormality detection are stored, an abnormality counter 182 updated at the time of abnormality detection, and a key 183 used for generation of a MAC. The key 183 is, for example, a random number and is the same value in all the ECUs 1. The volatile memory 19 is, for example, a RAM. The volatile memory 19 stores the communication counter 191 updated at the time of communication.

The abnormality detection unit 11 includes hardware and software for detecting various abnormalities related to transmission/reception of messages, which may occur in the ECU 1, and stores information corresponding to content of the detected abnormality in the abnormality detection related information 181. Further, the abnormality detection unit 11 updates the abnormality counter 182 according to the type of the detected abnormality.

The abnormality detection unit 11 detects an unexpected power interruption that is one of abnormalities related to transmission/reception of messages in the ECU 1, as described below, for example. The abnormality detection unit 11 records a bit flag indicating an unexpected power shutdown to the nonvolatile memory 18 after start of the ECU 1, and erases the bit flag as processing at the time of normal termination. Then, whether the unexpected power interruption has occurred is determined according to whether the bit flag indicating the unexpected power interruption is stored in the nonvolatile memory 18 at the time of next start. Various abnormalities occurring in the ECU 1 can be detected by detection methods corresponding to the types of the abnormalities, in addition to the above abnormality. Specific operations of the freshness verification unit 12, the message verification unit 13, the message generation unit 14, the freshness information management unit 15, the verification information generation unit 16, and the synchronization processing control unit 17 will be described below.

In the present embodiment, update of the abnormality counter 182 and the communication counter 191 is to increment values of the respective counters, that is, to increment the values by 1. Note that a random number table is prepared in advance, and the values of the counters may be updated by changing the order of the random numbers to be used. Further, initialization of the communication counter 191 is to return the value of the counter to an initial value such as zero. An update rule of the counter values and an initialization rule of the counter values are stored in the ROM or the nonvolatile memory 18. Therefore, the ECU 1 can determine which one of the two counter values is new, in other words, which one of the counter values is updated more frequently.

### (Abnormality Detection Related Information)

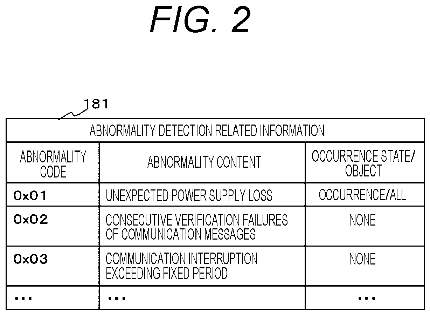

FIG. 2 is a diagram illustrating an example of the abnormality detection related information 181. The abnormality detection related information 181 stores one or more combinations of an abnormality code, abnormality content, and occurrence state/object in a table format, for example. The abnormality code is a code defined in advance for each type of abnormality. The occurrence content is the type of abnormality that has occurred. The occurrence state is presence or absence of occurrence of each abnormality code. FIG. 2 illustrates an example of the case where the power is interrupted at unexpected timing, and the occurrence state/object corresponding to an abnormality code "0x01" is updated. At this time, since the influence of communication disruption due to the interruption of the power affects all the connected ECUs, the occurrence state/object is updated to "occurrence/all".

### (Abnormality Counter)

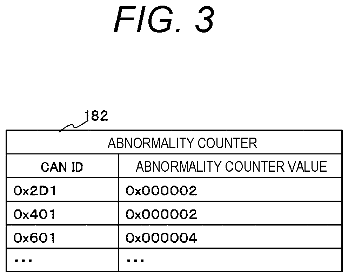

FIG. 3 is a diagram illustrating an example of the abnormality counter 182. In the abnormality counter 182, an abnormality counter value for each CAN-ID is stored in a table format, for example. In the example illustrated in FIG. 3, two abnormalities are counted in the CAN-ID of 0x2D1. While the abnormality counter 182 is updated by the abnormality detection unit 11 and the freshness information management unit 15, a range to be updated is different depending on an error detected by the abnormality detection unit 11. For example, when the abnormality detection unit 11 detects the unexpected power interruption, it is assumed that the influence affects all the ECUs, and thus the counters are updated for all the CAN-IDs. However, when the abnormality detection unit 11 detects consecutive failures of verification of communication messages for a specific CAN-ID, only the counter of the CAN-ID is updated.

### (Communication Counter)

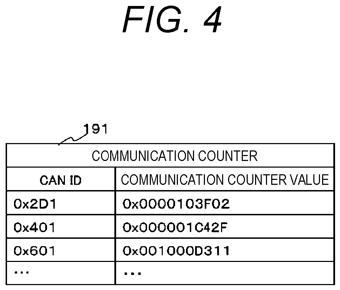

FIG. 4 is a diagram illustrating an example of the communication counter 191. In the communication counter 191, a communication counter value for each CAN-ID is stored in a table format, for example. This count value is updated by the freshness information management unit 15 when a message including the CAN-ID in the header is transmitted, and is updated by the synchronization processing control unit 17 when a message including the CAN-ID in the header is received. This count value is initialized and the initialized value is stored by the synchronization processing control unit 17 when the synchronization request message is received and a predetermined condition is satisfied. In the example illustrated in FIG. 4, communication of "0x103F02" times is counted for the CAN-ID of "0x2D1".

### (Configuration of Message)

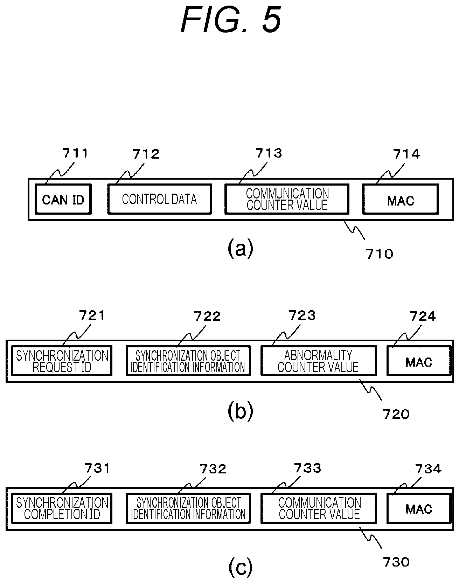

FIG. 5 is diagrams illustrating structures of messages. FIG. 5(a) illustrates a structure of the normal message, FIG. 5(b) illustrates a structure of the synchronization request message, and FIG. 5(c) illustrates a structure of the synchronization completion message. A normal message 710 illustrated in FIG. 5(a) includes a CAN-ID 711, control data 712, a communication counter value 713, and a MAC 714. The CAN-ID 711 is the header of the normal message 710, and represents the management object ID of the ECU 1 that transmits the normal message 710. Another ECU 1 connected to the communication bus 2 determines whether processing of the received message is necessary on the basis of the CAN-ID 711. The control data 712, the communication counter value 713, and the MAC 714 are the payload. The CAN-ID 711 and the control data 712 output by a control unit of the ECU 1 are used as they are. The communication counter value 713 is the value of the counter corresponding to the CAN-ID 711 stored in the communication counter 191 of the ECU 1 that transmits the normal message 710. For example, in a case where the CAN-ID 711 is "0x2D1" and the communication counter 191 stored in the transmission-side ECU 1 is the same as the example illustrated in FIG. 4, the communication counter value 713 is "0x103F02" that is the counter value corresponding to the CAN-ID of "0x2D1" in FIG. 4. The MAC 714 is the MAC generated by the verification information generation unit 16 of the ECU 1 that transmits the normal message 710. That is, the MAC 714 is the MAC generated using the CAN-ID 711, the control data 712, the communication counter value 713, and the count value of the abnormality counter 182, the count value corresponding to the CAN-ID 711, as the "data to be authenticated" and the key 183 as the "key" in the ECU 1 that transmits the normal message 710.

A synchronization request message 720 illustrated in FIG. 5(b) includes a synchronization request ID 721, synchronization object identification information 722, an abnormality counter value 723, and a MAC 724. The synchronization request ID 721 is the header of the synchronization request message 720. This synchronization request ID 721 is predetermined, and all the ECUs use the same synchronization request ID. In the synchronization object identification information 722, information specifying the ECU to be synchronized, for example, the management object ID of the ECU in which an abnormality has been detected is stored. The abnormality counter value 723 is the count value of the abnormality counter 182, the count value corresponding to the ECU specified in the synchronization object identification information 722. The MAC 724 is the MAC generated by the verification information generation unit 16 of the ECU 1 that transmits the synchronization request message 720. That is, the MAC 724 is the MAC generated using the synchronization request ID 721, the synchronization object identification information 722, the abnormality counter value 723, and the count value of the communication counter 191 stored in the ECU 1 that transmits the synchronization request message 720, the count value being of the ECU corresponding to the synchronization object identification information 722, as the "data to be authenticated" and the key 183 as the "key".

A synchronization completion message 730 illustrated in FIG. 5(c) includes a synchronization completion ID 731, synchronization object identification information 732, a communication counter value 733, and a MAC 734. The synchronization completion ID 731 is the header of the synchronization completion message 730. This synchronization completion ID 731 is predetermined and all the ECUs use the same synchronization completion ID 731. In the synchronization object identification information 732, information identifying the ECU for which synchronization has been completed, that is, the management object ID of the ECU that transmits the synchronization completion message 730 is stored. The communication counter value 733 is the counter value corresponding to the ECU 1 in the communication counter 191 of the ECU 1 that transmits the synchronization completion message 730 and is an initialized counter value as described below. The MAC 734 is the MAC generated by the verification information generation unit 16 of the ECU 1 that transmits the synchronization completion message 730. That is, the MAC 734 is the MAC generated using the synchronization completion ID 731, the synchronization object identification information 732, the communication counter value 733, and the count value of the abnormality counter 182 stored in the ECU 1 that transmits the synchronization completion message 730, the count value being of the ECU corresponding to the synchronization object identification information 732, as the "data to be authenticated" and the key 183 as the "key".

In the following description, the ECU that transmits the message is called transmission-side ECU 1S and the ECU that receives the message is called reception-side ECU 1R, for convenience.

### (Processing at Normal Time)

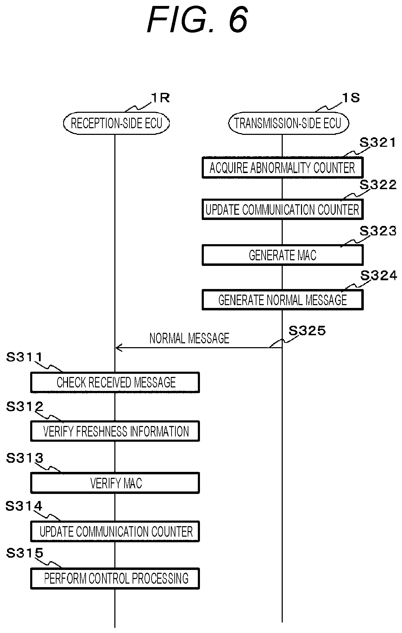

FIG. 6 is a diagram illustrating an authentication sequence at a normal time. The time passes from the upper side toward the lower side in FIG. 6. When the control unit of the transmission-side ECU 1S determines transmission of control data, the sequence in FIG. 6 is started. That is, the sequence in FIG. 6 is started in a state where the CAN-ID 711 and the control data 712 in FIG. 5 are determined.

Steps S321 to S324 to be described below are a sequence executed in the transmission-side ECU 1S.

In step S321, the freshness information management unit 15 acquires the abnormality counter value corresponding to the CAN-ID 711 determined by the control unit from the abnormality counter 182. In following step S322, the freshness information management unit 15 acquires the counter value corresponding to the CAN-ID 711 determined by the control unit from the communication counter 191, and updates the counter value, that is, increments the counter value, to update the communication counter value 713. In following step S323, the verification information generation unit 16 generates the MAC 714, for the CAN-ID 711 and the control data 712 determined by the control unit, the abnormality counter value acquired in the step S321, and the communication counter value 713 updated in the step S322. A cipher-based MAC (CMAC) or a hash-based MAC (HMAC) can be used as a generation algorithm of the MAC 714.

In following step S324, the message generation unit 14 generates the normal message 710 including the CAN-ID 711 and the control data 712 determined by the control unit, the communication counter value 713 updated in step S322, and the MAC 714 generated in step S323. In following step S325, the communication unit 10 transmits the normal message 710 generated in step S324 to the communication bus 2.

Steps S311 to S315 to be described below are a sequence executed in the reception-side ECU 1R.

In step S311, the communication unit 10 of the reception-side ECU 1R receives the normal message 710 transmitted from the transmission-side ECU 1S in step S325 and checks the received normal message 710. That is, the communication unit 10 acquires the CAN-ID 711 (hereinafter referred to as reception header ID) that is the header of the received normal message 710, and the processing proceeds to step S312 in a case where the reception header ID is the management object ID of the transmission-side ECU 1S that outputs the message to be acquired by the reception-side ECU 1R, or the present processing terminates in a case where the reception header ID is not the management object ID of the transmission-side ECU 1S.

In step S312, the freshness verification unit 12 acquires the communication counter value 713 (hereinafter referred to as "transmission-side counter value") included in the received normal message 710, and the communication counter value (hereinafter referred to as "reception-side counter value") corresponding to the reception header ID in the communication counter 191 of the reception-side ECU 1R. Then, the freshness verification unit 12 compares the freshness of the two counter values, and the processing proceeds to step S313 in a case where the transmission-side counter value is determined as fresher than the reception-side counter value, that is, the transmission-side counter value is determined as the freshest, or the present processing terminates in a case where the transmission-side counter value and the reception-side counter value are determined as equal or the reception-side counter value is determined as fresher than the transmission-side counter value. Note that, in a case where the difference between the transmission-side counter value and the reception-side counter value exceeds a predetermined threshold value, the counter values may be determined as the non-freshest on the ground of the too large difference. Note that the transmission-side counter value and the reception-side counter value are expected to be equal at the point of time before the transmission-side ECU 1S creates the normal message, for example, in step S321. Then, since only the transmission-side counter value is updated in step S322, the difference between the counter values is 1 in an ideal state.

In step S313, the message verification unit 13 creates the "data to be authenticated" as described below, and calculates a MAC for verifying validity of the received message (hereinafter the MAC is referred to as verification MAC), using the key 183 of the reception-side ECU 1R as the "key". The "data to be authenticated" for calculating the verification MAC at this time is created on the basis of the CAN-ID 711 and the control data 712 included in the received normal message 710, the transmission-side counter value, the freshness of which has been confirmed in step S312, that is, the communication counter value 713 included in the received normal message 710, and the abnormality counter value corresponding to the reception header ID in the abnormality counter 182 of the reception-side ECU 1R. The message verification unit 13 compares the calculated verification MAC and a MAC value 714 included in the received normal message, and the processing proceeds to step S314 in a case where the values match or the present processing terminates in a case where the values do not match.

In step S314, the synchronization processing control unit 17 stores the communication counter value 713 included in the received normal message 710 to the communication counter 191. That is, by the present processing, the reception-side counter value is also updated on the reception-side ECU 1R in accordance with the transmission-side counter value. In following step S315, the control unit of the reception-side ECU 1R executes predetermined control processing on the basis of the control data 712 included in the received normal message 710.

By the above sequence processing, control processing using control data determined as correct by the message authentication can be executed for communication messages between the transmission-side ECU 1S and the reception-side ECU 1R.

### (Processing at Abnormality Detection)

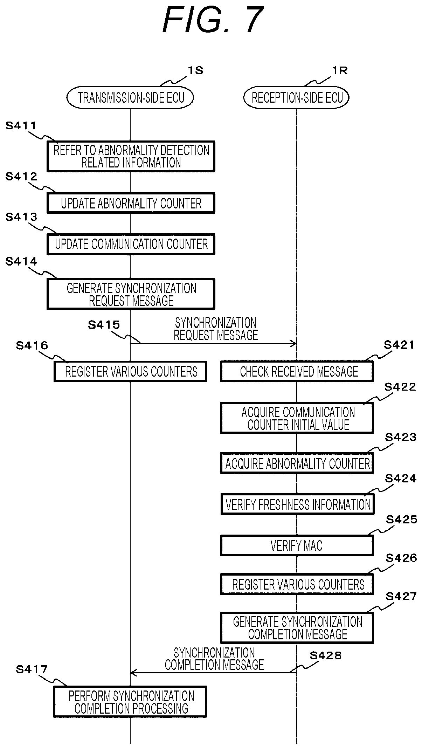

FIG. 7 is a diagram illustrating a synchronization sequence at the time of abnormality detection. The time passes from the upper side toward the lower side in FIG. 7. When the abnormality detection unit 11 of the transmission-side ECU 1S detects an abnormality, the abnormality detection unit 11 updates an occurrence state column of the abnormality detection related information 181, and the sequence in FIG. 7 is started.

In step S411, the freshness information management unit 15 refers to the abnormality detection related information 181 and determines a CAN-ID affected by the abnormality that has occurred (hereinafter the CAN-ID is referred to as abnormality affected CAN-ID). In following step S412, the freshness information management unit 15 obtains the counter value of the abnormality affected CAN-ID from the abnormality counter 182, and updates the value of the counter to update the abnormality counter value 723. For example, when the detected abnormality is the unexpected power interruption with an abnormality code 0x1, the abnormality counter values of all the CAN-IDs posted in the abnormality counter 182 are incremented. Further, when the detected abnormality is consecutive authentication failures of communication messages with an abnormality code 0x2, the abnormality counter value of the CAN-ID regarding the communication for which the authentication has consecutively failed is incremented.

In following step S413, the freshness information management unit 15 acquires the initial value of the communication counter 191 according to a predetermined rule. For example, zero that is a predetermined value is set as the initialized communication counter value. In following step S414, the verification information generation unit 16 generates the MAC 724, for the synchronization request ID 721, the synchronization object identification information 722 that is the abnormality affected CAN-ID determined in step S411, the abnormality counter value 723 updated in step S412, and the communication counter value after initialization acquired in step S413. Then, the message generation unit 14 generates the synchronization request message 720 having the synchronization request ID 721 stored in the header and having the synchronization object identification information 722, the abnormality counter value 723, and the generated MAC 724 in the payload. In following step S415, the communication unit 10 transmits the synchronization request message 720 generated in step S414 to the communication bus 2. In following step S416, the synchronization processing control unit 17 registers the abnormality counter value updated in step S412 in the abnormality counter 182, and registers the communication counter value initialized in step S413 in the communication counter 191.

When the communication unit 10 of the reception-side ECU 1R receives the synchronization request message 720 transmitted by the communication unit 10 of the transmission-side ECU 1S in step S415, the processing of step S421 is executed in the reception-side ECU 1R.

In step S421, the communication unit 10 of the reception-side ECU 1R receives the synchronization request message 720 including the synchronization request ID 721. Then, the synchronization object identification information 722 is specified from the received synchronization request message 720, and whether the management object ID of the reception-side ECU 1R is included in the synchronization object identification information 722, in other words, whether the reception-side ECU 1R needs to perform the synchronization processing is determined. Here, assuming that the synchronization processing is determined as necessary, and the processing proceeds to step S422.

In step S422, the freshness information management unit 15 acquires the initial value of the communication counter 191 according to a predetermined rule. For example, zero that is a predetermined value is set as the initialized communication counter value. In following step S423, the freshness information management unit 15 obtains the abnormality counter value of the management object ID of the reception-side ECU 1R from the abnormality counter 182. Note that, in this step, only the abnormality counter value is acquired, and update of the counter value as in step S412 is not performed.

In following step S424, the freshness verification unit 12 compares the abnormality counter value 723 included in the received synchronization request message 720 with the counter value of the abnormality counter 182 acquired in step S424. In a case where it is confirmed that the received abnormality counter value 723 is fresher than the counter value of the abnormality counter 182, that is, the received abnormality counter value 723 is the freshest, the processing proceeds to step S425, or the present processing terminates otherwise. For example, as a method of verifying the freshness, the received abnormality counter value 723 is determined as the freshest in a case where the received abnormality counter value 723 is larger than the value of the abnormality counter 182. Further, a threshold value may be set for the difference between the received abnormality counter value 723 and the value of the abnormality counter 182, and the present processing may terminate in a case where the difference exceeds the threshold value.

In following step S425, the message verification unit 13 generates the verification MAC, similarly to step S313 in FIG. 6, using the abnormality counter value 723 included in the received synchronization request message 720 and the freshness of which has been confirmed in step S424, the initial value of the communication counter 191 acquired in step S422, and the synchronization request CAN-ID 721, as the "data to be authenticated". Then, the message verification unit 13 compares the MAC 724 included in the received synchronization request message 720 with the calculated verification MAC, and the processing proceeds to step S426 in a case where it is determined that the MACs match, or the present processing terminates in a case where it is determined that the MACs do not match.

In step S426, the synchronization processing control unit 17 stores the abnormality counter value 723 included in the synchronization request message 720 received in step S421 as the abnormality counter value of the management object ID of the reception-side ECU 1R in the abnormality counter 182, and stores the initial value of the communication counter 191 acquired in step S422 as the communication counter value of the management object ID of the reception-side ECU 1R in the communication counter 191. In following step S427, the message generation unit 14 generates the synchronization completion message 730 having the CAN-ID indicating synchronization completion stored in the header as the synchronization completion ID 731 and having the synchronization object identification information 732 indicating the reception-side ECU 1R stored in the payload. In following step S428, the communication unit 10 transmits the synchronization completion message 730 generated in step S427 to the communication bus 2.

In step S417, when receiving the synchronization completion message 730, the synchronization processing control unit 17 completes the synchronization sequence.

According to the above steps, the transmission-side ECU 1S transmits the synchronization request message 720 to the reception-side ECU 1R, the reception-side ECU 1R updates the abnormality counter 182 and the communication counter 191 according to the predetermined rules, whereby the value of the communication counter 191 shared by the transmission-side ECU 1S and the reception-side ECU 1R can be resynchronized.

### (Flowchart at Request Transmission Side)

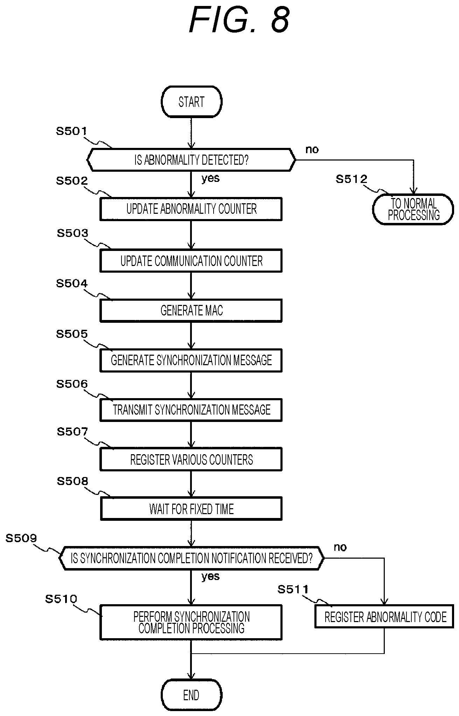

FIG. 8 is a flowchart illustrating the processing of the transmission-side ECU 1S in the synchronization sequence at the time of abnormality detection illustrated in FIG. 7, that is, the processing in steps S411 to S417 in FIG. 7. The ECU 1 executes the processing illustrated in FIG. 8 every fixed time.

In step S501, the abnormality detection unit 11 determines whether the abnormality of the transmission-side ECU 1S has been detected. When determining that an abnormality has been detected, the abnormality detection unit 11 updates the abnormality detection related information 181 on the basis of the detected abnormality, and the processing proceeds to step S502. By the update of the abnormality detection related information 181, information that can determine the abnormality affected CAN-ID is also stored in the abnormality detection related information 181. When the abnormality detection unit 11 determines that the abnormality has not been detected, the processing proceeds to step S512 and normal processing is performed. Since the normal processing in step S512 has been described with reference to FIG. 6, the description thereof is omitted here.

In step S502, the freshness information management unit 15 refers to the abnormality detection related information 181, and determines the CAN-ID affected by the abnormality that has occurred, that is, the abnormality affected CAN-ID. Then, the counter value of the abnormality affected CAN-ID is acquired from the abnormality counter 182, and the value of the abnormality counter 182 is updated. Note that, in a case where a plurality of CAN-IDs is affected by the abnormality, the processing in step S502 and subsequent steps is executed for each of the abnormality affected CAN-IDs. In following step S503, the freshness information management unit 15 acquires the initial value of the communication counter value associated with the abnormality affected CAN-ID. In following step S504, the verification information generation unit 16 generates the MAC 724 for the value of the abnormality counter 182 updated in step S503, the initialized communication counter value acquired in step S504, and the CAN-ID indicating the synchronization request. Next, the processing proceeds to step S505.

In step S505, the message generation unit 14 generates the synchronization request message 720 having the CAN-ID indicating the synchronization request stored in the header as the synchronization request ID 721 and having the synchronization object identification information 722 indicating the abnormality affected CAN-ID, the abnormality counter value 723 indicating the value of the abnormality counter 182, and the generated MAC 724 stored in the payload. In following step S506, the communication unit 10 transmits the synchronization request message 720 generated in step S505 to the communication bus 2. In following step S507, the synchronization processing control unit 17 registers the abnormality counter value updated in step S502 as the counter value of the abnormality affected CAN-ID in the abnormality counter 182. Further, the synchronization processing control unit 17 registers the communication counter value initialized in step S503 as the counter value of the abnormality affected CAN-ID in the communication counter 191. Next, the processing proceeds to step S508.

In step S508, the communication unit 10 waits for the synchronization completion message 730 sent from the reception-side ECU 1R for a fixed time, and the processing proceeds to step S509. In step S509, the communication unit 10 determines whether the synchronization completion message 730 has been received from the reception-side ECU 1R. The processing proceeds to step S510 in a case where the communication unit 10 determines that the synchronization completion message 730 has been received, or proceeds to step S511 in a case where the communication unit 10 determines that the synchronization completion message 730 has not been received.

In step S510, the synchronization processing control unit 17 updates the synchronization completion processing, that is, the occurrence state of the abnormality detection related information 181 with "none", and the processing in FIG. 8 terminates. In step S511, the synchronization processing control unit 17 updates the occurrence state of the abnormality code with "occurrence" to indicate that the synchronization processing has failed in the abnormality detection related information 181, and the processing in FIG. 8 terminates.

By the above processing, the transmission-side ECU 1S transmits the synchronization request message 720 generated at a time when the abnormality is detected to the reception-side ECU 1R, and can confirm that the synchronization is made when receiving the synchronization completion message 730 from the reception-side ECU 1R. Note that, in a case where an abnormality frequently occurs, there is a possibility of failure, so the processing may separately proceed to error processing.

### (Flowchart at Synchronization Request Reception Side)

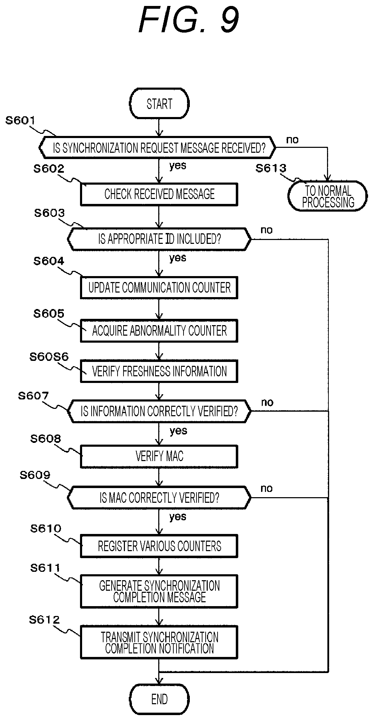

FIG. 9 is a flowchart illustrating the processing of the reception-side ECU 1R in the synchronization sequence at the time of abnormality detection illustrated in FIG. 7, that is, the processing in steps S421 to S428 in FIG. 7. When the ECU 1 receives the synchronization request message 720, the processing illustrated in FIG. 9 is started.

In step S601, the communication unit 10 determines whether the synchronization request message 720 including the synchronization request ID 721 has been received. The processing proceeds to step S602 in a case of affirmative determination, or proceeds to step S613 in a case of negative determination. Since the normal processing in step S613 has been described with reference to FIG. 6, the description thereof is omitted here.

In step S602, the communication unit 10 acquires the synchronization object identification information 722 from the received synchronization request message 720 and the processing proceeds to step S603.

In step S603, the communication unit 10 determines whether the management object ID of the reception-side ECU 1R is included in the synchronization object identification information 722 acquired in step S602. The processing proceeds to step S604 in a case where the communication unit 10 determines that the management object ID of the reception-side ECU 1R is included, or the processing illustrated in FIG. 9 terminates in a case where the communication unit 10 determines that the management object ID is not included.

In step S604, the freshness information management unit 15 acquires the initial value of the communication counter 191 according to a predetermined rule, and the processing proceeds to step S605. In step S605, the freshness information management unit 15 acquires the abnormality counter value of the management object ID of the reception-side ECU 1R from the abnormality counter 182.

In step S606, the freshness verification unit 12 compares the abnormality counter value 723 included in the received synchronization request message 720 with the counter value of the abnormality counter 182 acquired in step S605, and confirms the freshness of the abnormality counter value 723. In following step S607, the process proceeds to step S608 in a case where the freshness verification unit 12 can confirm that the abnormality counter value 723 included in the synchronization request message 720 is fresher than the counter value of the reception-side ECU 1R acquired in step S604 as a result of the comparison in step S606, or the processing illustrated in FIG. 9 terminates in a case where the freshness verification unit 12 cannot confirm the freshness.

In step S608, the message verification unit 13 generates the verification MAC, using the abnormality counter value 723, the freshness of which has been confirmed in step S607, the initial value of the communication counter 191 acquired in step S604, and the synchronization request CAN-ID 722, as the "data to be authenticated". The message verification unit 13 then compares the MAC 724 included in the received synchronization request message 720 with the calculated verification MAC and the processing proceeds to step S609. In step S609, the processing proceeds to step S610 in a case where the message verification unit 13 determines that the MAC 724 and the verification MAC match as a result of the comparison in step S608, or the processing illustrated in FIG. 9 terminates in the case where the message verification unit 13 determines that the MACs do not match.

In step S610, the synchronization processing control unit 17 stores the abnormality counter value 723 included in the synchronization request message 720 as the abnormality counter value of the management object ID of the reception-side ECU 1R in the abnormality counter 182, and stores the initial value of the communication counter 191 acquired in step S604 as the communication counter value of the management object ID of the reception-side ECU 1R in the communication counter 191. Next, the processing proceeds to step S611.

In step S611, the message generation unit 14 generates the synchronization completion message 730 having the synchronization completion ID 731 stored in the header and having the synchronization object identification information 732 indicating the reception-side ECU 1R stored in the payload. In following step S612, the communication unit 10 transmits the synchronization completion message 730 generated in step S611 to the communication bus 2, and the processing illustrated in FIG. 9 terminates.

According to the above-described first embodiment, the following functions and effects can be obtained.
(1) The ECU 1 includes the communication unit 10 configured to receive the message including an authentication code, that is, a MAC, a storage unit configured to store the key 183, that is, the nonvolatile memory 18 and the volatile memory 19, and the message verification unit 13 configured to generate an authentication code, using the key 183, for the data to be verified including data excluding at least the authentication code from the message received by the communication unit 10, a first counter value updated in response to reception of the message and initialized at a time when an abnormality regarding transmission/reception of the message occurs, that is, the counter value of the communication counter 191, and a second counter value updated at a time when the abnormality occurs, that is, the counter value of the abnormality counter 182, and to verify the message according to whether the authentication code included in the message and the generation authentication code match.
   The ECU 1 includes the communication counter 191 updated at the time of communication and the abnormality counter 182 updated at the time of an abnormality. The ECU 1 generates the MAC using the updated value of the communication counter 191 and the stored value of the abnormality counter 182 in the case of receiving the normal message not including the synchronization request ID 721, and verifies the received message. The ECU 1 generates the MAC using the initialized value of the communication counter 191 and the updated value of the abnormality counter 182 in the case of receiving the synchronization request message including the synchronization request ID 721, and verifies the received message. Therefore, the ECU 1 can verify the message using the abnormality counter 182 even when the message transmitter and the communication counter 191 become asynchronous from each other. Since the communication counter 191 is updated every time communication is performed, only the transmission side is updated due to the unexpected power interruption or noise on the communication line, and there is a possibility that the communication counters 191 become asynchronous from each other between the transmission side and the reception side. The abnormality counter 182 does not have such a possibility.
(2) The message includes the first counter value or the second counter value, and the storage unit further includes a first counter for obtaining the first counter value, that is, the communication counter 191, and a second counter for obtaining the second counter value, that is, the abnormality counter 182. In a case where the first counter value is included in the message received by the communication unit 10, the message verification unit generates the authentication code using the first counter value included in the message received by the communication unit and the second counter value acquired from the second counter, and in a case where the second counter value is included in the message received by the communication unit 10, the message verification unit generates the authentication code using the first counter value acquired from the first counter and the second counter value included in the message received by the communication unit 10. Since the received value is used in the calculation of the MAC, the differences in communication counts and abnormality occurrence counts between the transmission-side ECU 1S and the reception-side ECU 1R are allowable.
(3) The freshness verification unit 12 that determines whether the first counter value or the second counter value included in the message is fresher than the value of the first counter or the value of the second counter stored in the storage unit, respectively, is further included. The message verification unit 13 generates the authentication code when the freshness verification unit 12 determines that the first counter value or the second counter value included in the message is fresher than the value of the first counter or the value of the second counter stored in the storage unit. Therefore, the ECU 1 can confirm the freshness of the received normal message 710 and the synchronization request message 720.
(4) The synchronization processing control unit 17 that updates the value of the first counter or the value of the second counter stored in the storage unit with the first counter value or the second counter value included in the message when the freshness verification unit 12 determines that the first counter value or the second counter value included in the message is fresher than the value of the first counter or the value of the second counter stored in the storage unit is included. Therefore, the ECU 1 can synchronize the value of the communication counter 191 or the value of the abnormality counter 182 with the other ECU 1 that has transmitted the message.
(5) The communication unit 10 configured to transmit a message, the abnormality detection unit 11 configured to detect an abnormality regarding transmission/reception of the message, the storage unit, that is, the nonvolatile memory 18 and the volatile memory 19, configured to store the first counter updated in response to transmission of the message and initialized at a time when the abnormality detection unit detects the abnormality, that is, the communication counter 191, a second counter updated at a time when the abnormality detection unit detects the abnormality, that is, the abnormality counter 182, and the key 183, and the verification information generation unit 16 configured to generate an authentication code, using the key, for data to be verified including a value of the first counter and a value of the second counter are included. The communication unit 10 transmits a message including the authentication code generated by the verification information generation unit 16.
   Therefore, when it is assumed that the communication counter 191 becomes asynchronous from the reception side due to detection of an abnormality, the ECU 1 can generate authentication information, using the initialized value of the communication counter 191 and the initialized value of the abnormality counter 182.
(6) The communication unit 10 transmits the synchronization request message 720 including the value of the second counter in addition to the authentication code in a case where the abnormality detection unit 11 detects an abnormality, and transmits the normal message 710 including the value of the first counter in addition to the authentication code in a case where the abnormality detection unit 11 does not detect an abnormality.
   Therefore, the ECU 1 transmits also information indicating the freshness of data, that is, the counter value, and allows the reception side to verify the freshness of the data. Since the MAC included in the transmission data is calculated for the data to be verified including the counter value, even if a third party without the key 183 rewrites the counter value, the message verification unit 13 on the reception side can detects an error. Therefore, it is effective as a countermeasure against data falsification.
(7) The storage unit includes the volatile memory 19 and the nonvolatile memory 18, and the first counter, that is, the communication counter 191 is stored in the volatile memory 19, and the second counter, that is, the abnormality counter 182 is stored in the nonvolatile memory 18.

Therefore, even when an unintended power interruption occurs, the value of the abnormality counter 182 can be held. Since the communication counter 191 can resynchronize with other devices by means of a resynchronization mechanism of the ECU 1, there is little need to hold the value at the time of a power interruption. Further, since the communication counter 191 frequently undergoes rewriting as compared with the abnormality counter 182, the communication counter 191 is stored in the volatile memory 19 having a less restrictive number of rewriting, whereby the product life can be made long.

### (First Modification)

The abnormality counter value 723 may not be included in the synchronization request message 720. In the present modification, when the ECU 1 detects an abnormality or receives the synchronization request message 720, the ECU 1 updates the counter value of the abnormality counter 182. The ECU 1, which has received the synchronization request message 720, generates the MAC using the counter value of the abnormality counter 182 updated in response to the abnormality detection or the reception of the synchronization request message 720, and verifies the received synchronization request message 720.

According to the first modification, the following functions and effects can be obtained.
(1) The storage unit includes the first counter for obtaining the first counter value, that is, the communication counter 191, and the second counter for obtaining the second counter value, that is, the abnormality counter 182. The message verification unit 13 generates the authentication code using the first counter value acquired from the first counter and the second counter value obtained from the second counter. Therefore, the size of the synchronization request message 720 can be reduced by not including the abnormality counter value 723.

### (Second Modification)

The communication counter value 713 may not be included in the normal message 710. In this case, the ECU 1, which has received the normal message 710, updates the communication counter 191 on the ground of the reception of the normal message 710. Then, the ECU 1 generates the MAC using the updated value of the communication counter 191 and verifies the received normal message 710.

According to the second modification, the following functions and effects can be obtained.
(1) The storage unit includes the first counter for obtaining the first counter value, that is, the communication counter 191, and the second counter for obtaining the second counter value, that is, the abnormality counter 182. The message verification unit 13 generates the authentication code using the first counter value acquired from the first counter and the second counter value obtained from the second counter. Therefore, the size of the normal message 710 can be reduced by not including the communication counter value 713. The control data 712 can be increased by the reduced size of the communication counter value 713 although the size of the normal message 710 is unchanged.

### (Third Modification)

In the first embodiment, the CAN-ID has been used as the synchronization object identification information 722 included in the synchronization request message and synchronization completion message. However, the synchronization object identification information 722 is not limited to the CAN-ID, an any information can be used as long as the information can identify each device. For example, an ID unique to each ECU 1, which is separately defined, may be used as synchronization object identification information 722.

### (Fourth Modification)

Information that can identify a device, for example, an ID unique to each ECU 1 may be used in place of the CAN-ID in the abnormality counter 182 and the communication counter 191.

### (Fifth Modification)

A CAN-ID different for each CAN-ID to be synchronized may be used as the header of the synchronization request message. For example, CAN-IDs used for the control communication message may be limited to 0x000 to 0x3FF, and IDs of synchronization communication frames corresponding to the respective CAN-IDs may be 0x400 to 0x7FF. In this case, the synchronization object identification information 722 may not be included in the synchronization request message 720.

### (Sixth Modification)

The ECU 1 may store, in the nonvolatile memory 18, the communication counter 191 stored in the volatile memory 19. Further, the communication counter 191 may be read out from the nonvolatile memory 18 to the volatile memory 19 at the time of activation and may be stored in the nonvolatile memory 18 at the time of stop.

### (Seventh Modification)

In the first embodiment, the program has been stored in the ROM (not illustrated), but the program may be stored in the nonvolatile memory 18. Further, the ECU 1 may include an input/output interface (not illustrated), and the program may read from another device to the nonvolatile memory 18 or the volatile memory 19 via the input/output interface and a medium available to the ECU 1, as needed. Here, the medium refers to, for example, a storage medium detachable to an input/output interface, or a communication medium, that is, a wired, wireless, or optical network, or a carrier wave or a digital signal propagating through the network. In addition, some or all of the functions realized by the program may be realized by a hardware circuit or an FPGA.

### (Eighth Modification)

In the first embodiment, the present invention has been applied to an in-vehicle network. However, the present invention may be applied to a control system or an information system. That is, not only the ECU but also other control devices are assumed as specific aspects of the information processing apparatus according to the present invention.

### (Second Embodiment)

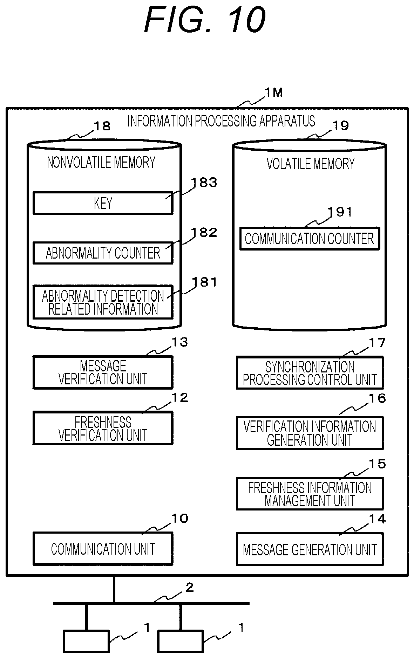

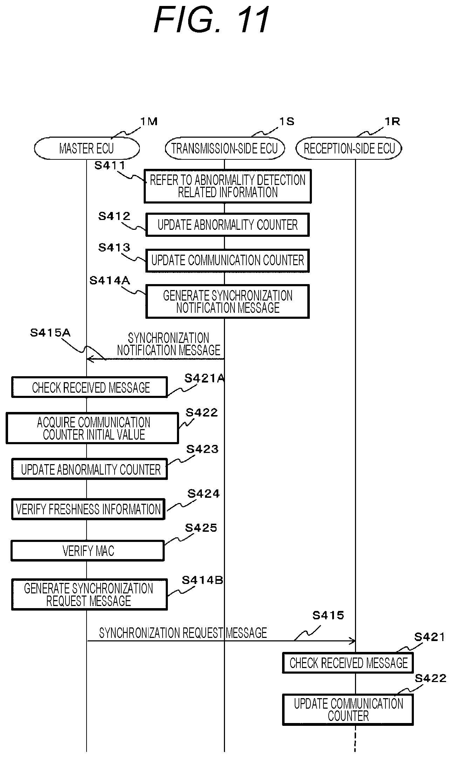

A second embodiment of an ECU that is an embodiment of an information processing apparatus according to the present invention will be described with reference to FIGS. 10 and 11. In the following description, the same reference numerals are given to the same constituent elements as those of the first embodiment, and the difference will mainly be described. Matters not specifically described are the same as those of the first embodiment. The present embodiment is mainly different from the first embodiment in that a master-device transmits a synchronization request message 720.

Configurations and operations of an ECU 1 in the present embodiment are similar to those of the first embodiment except the following points. That is, in the second embodiment, when the ECU 1 detects an abnormality, the ECU 1 transmits a synchronization notification message in place of a synchronization request message 720. The difference between the synchronization request message 720 and the synchronization notification message is that a header of the message is a synchronization notification ID instead of a synchronization request ID. Payload configurations of the messages are similar.

FIG. 10 is a diagram illustrating a configuration of a master ECU 1M. The master ECU 1M is connected to a plurality of ECUs 1 via a communication bus 2. The configuration of the master ECU 1M is obtained by removing the abnormality detection unit 11 from the ECU 1 in FIG. 1 in the first embodiment. However, operation of a program stored in a ROM is different from that of the ECU 1 in the first embodiment.

### (Outline of Operation)

FIG. 11 is a diagram illustrating a synchronization sequence at the time of abnormality detection in the second embodiment. The time passes from the upper side to the lower side in FIG. 11. When an abnormality detection unit 11 of a transmission-side ECU 1S detects an abnormality, the sequence in FIG. 11 is started. FIG. 11 corresponds to FIG. 7 in the first embodiment, and the same step numbers are given to processing similar to those in FIG. 7. Hereinafter, differences from FIG. 7 will mainly be described.

Processing of updating an abnormality counter 182 and a communication counter 191 by a freshness information management unit 15 of the transmission-side ECU 1S, which is illustrated in steps S411 to S413 in FIG. 11, is similar to the processing in the first embodiment. In following step S414A, a verification information generation unit 16 of the transmission-side ECU 1S generates a MAC for a value of the abnormality counter updated in step S412, an initialized communication counter value acquired in step S413, and a synchronization notification ID. Then, a message generation unit 14 of the transmission-side ECU 1S generates a synchronization notification message having the synchronization notification ID stored in a header and having the abnormality counter 182 and the generated MAC stored in a payload. In following step S415A, a communication unit 10 of the transmission-side ECU 1S transmits the synchronization notification message generated in step S414A to the communication bus 2.

When a communication unit 10 of the master ECU 1M receives the synchronization notification message transmitted by the communication unit 10 of the transmission-side ECU 1S in step S415A, processing in step S421A is executed in the master ECU 1M. In step S421A, whether the header of the message received by the communication unit 10 is the synchronization notification ID is determined. Here, the processing proceeds to step S422, assuming that the header is the synchronization notification ID.

Acquisition of an initial value of the communication counter in step S422, acquisition of a count value of the abnormality counter 182 in step S423, verification of freshness information in step S424, and verification of the MAC in step S425 are performed by the master ECU 1M, similarly to the processing in the first embodiment. In step S414B executed at a time when the verification of the MAC has succeeded in step S425, the verification information generation unit 16 of the master ECU 1M generates a MAC 724, for a synchronization request ID 721, synchronization object identification information 722 included in the received synchronization notification message, an abnormality counter value 723 updated in step S423, and the initialized communication counter value acquired in step S422. Note that the abnormality counter value updated in step S423 is the same as the abnormality counter value included in the received synchronization notification message. Then, the message generation unit 14 of the master ECU 1M generates the synchronization request message 720 having the synchronization request ID 721 stored in the header and having the synchronization object identification information 722, the abnormality counter value 723, and the generated MAC 724 in the payload.

In following step S415, the communication unit 10 transmits the synchronization request message 720 generated in step S414B to the communication bus 2. Since operation of a reception-side ECU 1R that has received the synchronization request message 720 is similar to the first embodiment, the description is omitted.

According to the above-described second embodiment, the following functions and effects can be obtained.
(1) The communication unit 10 of the master ECU 1M receives a message including an authentication code, and includes the message verification unit 13 configured to generate an authentication code, using the key, for the data to be verified including data excluding at least the authentication code from the message received by the communication unit 10, a first counter value updated in response to reception of the message and initialized at a time when an abnormality regarding transmission/reception of the message occurs, and a second counter value updated at a time when the abnormality occurs, and to verify the message according to whether the authentication code included in the message and the generated authentication code match. When the message verification unit 13 determines that the authentication code included in the message and the generated authentication code match, the abnormality detection unit 11 determines that an abnormality has been detected.

Therefore, the master ECU 1M can transmit the synchronization request message similarly to when the ECU 1 has detected the abnormality, by verifying a synchronization instruction message. Further, the master ECU 1M can have a configuration in which the abnormality detection unit 11 is substantially removed from the ECU 1.

### (Modification of Second Embodiment)

The master ECU 1M may be arranged as a gateway device extending over two networks. In this case, the synchronization request message 720 is transmitted to a second network when the synchronization notification message is received from a first network, and the synchronization request message 720 is transmitted to the first network when the synchronization notification message is received from the second network. Furthermore, the synchronization request ID and a synchronization instruction ID may be set to the same. Further, a synchronization object identification information 732 included in the received synchronization notification message may be rewritten to be the synchronization object identification information 722 of the synchronization request message 720.

The embodiments and modifications described above may be combined.

Although various embodiments and modifications have been described above, the present invention is not limited to the content of the embodiments and modifications. Other aspects conceivable within the technical idea of the present invention are also included within the scope of the present invention.

- 1: ECU
- 2: communication bus
- 10: communication unit
- 11: abnormality detection unit
- 12: freshness verification unit
- 13: message verification unit
- 14: message generation unit
- 15: freshness information management unit
- 16: verification information generation unit
- 17: synchronization processing control unit
- 18: nonvolatile memory
- 19: volatile memory
- 181: abnormality detection related information
- 182: abnormality counter
- 183: key
- 191: communication counter

## Claims

1. An arithmetic device (1) comprising:
a communication unit (10) configured to receive a message including a reception authentication code;
a storage unit (18, 19) configured to store a key; and
a message verification unit (16) configured to generate a generation authentication code, using:
the key, for data to be verified including data excluding at least the reception authentication code from the message received by the communication unit;
a first counter value (191) updated in response to reception of the message and initialized at a time when an abnormality regarding transmission/reception of the message occurs; and
a second counter value (182) updated at a time when the abnormality occurs;
the message verification unit being further configured to verify the message according to whether the reception authentication code and the generation authentication code match.

2. The arithmetic device according to claim 1, wherein
the message includes the first counter value or the second counter value,
the storage unit further stores a first counter for acquiring the first counter value and a second counter for acquiring the second counter value,
the message verification unit generates the generation authentication code, using the first counter value included in the message received by the communication unit and the second counter value acquired from the second counter in a case where the first counter value is included in the message received by the communication unit, and
the message verification unit generates the generation authentication code, using the first counter value acquired from the first counter and the second counter value included in the message received by the communication unit in a case where the second counter value is included in the message received by the communication unit.

3. The arithmetic device according to claim 2, further comprising
a freshness verification unit configured to determine whether the first counter value or the second counter value included in the message is fresher than a value of the first counter or a value of the second counter stored in the storage unit, respectively, wherein
the message verification unit generates the generation authentication code when the freshness verification unit determines that the first counter value or the second counter value included in the message is fresher than the value of the first counter or the value of the second counter stored in the storage unit.

4. The arithmetic device according to claim 3, further comprising
a synchronization processing control unit configured to update the value of the first counter or the value of the second counter stored in the storage unit with the first counter value or the second counter value included in the message when the freshness verification unit determines that the first counter value or the second counter value included in the message is fresher than the value of the first counter or the value of the second counter stored in the storage unit.

5. The arithmetic device according to claim 1, wherein
the storage unit further stores a first counter for acquiring the first counter value and a second counter for acquiring the second counter value, and
the message verification unit generates the generation authentication code, using the first counter value acquired from the first counter and the second counter value acquired from the second counter.

6. An arithmetic device (1) comprising:
a communication unit (10) configured to transmit a message;
an abnormality detection unit (11) configured to detect an abnormality regarding transmission/reception of the message;
a storage unit (18, 19) configured to store a first counter updated in response to transmission of the message and initialized at a time when the abnormality detection unit detects the abnormality, a second counter updated at a time when the abnormality detection unit detects the abnormality, and a key; and
a verification information generation unit (16) configured to generate a generation authentication code, using the key, for data to be verified, including a value of the first counter and a value of the second counter, wherein
the communication unit transmits the message including the generation authentication code generated by the verification information generation unit.

7. The arithmetic device according to claim 6, wherein
the communication unit
transmits the message including the value of the second counter in addition to the generation authentication code in a case where the abnormality detection unit detects the abnormality, and
transmits the message including the value of the first counter in addition to the generation authentication code in a case where the abnormality detection unit does not detect the abnormality.

8. The arithmetic device according to any one of claims 2, 5, and 6, wherein
the storage unit includes a volatile memory and a nonvolatile memory, and
the first counter is stored in the volatile memory, and the second counter is stored in the nonvolatile memory.

9. The arithmetic device according to claim 6, wherein
the communication unit receives a message including a reception authentication code, and
a message verification unit configured to generate an authentication code, using the key, for data to be verified including data excluding at least the reception authentication code from the message received by the communication unit, a first counter value updated in response to reception of the message and initialized at a time when an abnormality regarding transmission/reception of the message occurs, and a second counter value updated at a time when the abnormality occurs, and to verify the message according to whether the reception authentication code and the generation authentication code match is further included, and
the abnormality detection unit determines that the abnormality is detected when the message verification unit determines that the reception authentication code and the generation authentication code match.

10. An authentication system comprising a first arithmetic device (1) and a second arithmetic device (1) connected by a network, wherein
the first arithmetic device (1) includes:
a first communication unit (10) configured to transmit a message;
an abnormality detection unit (11) configured to detect an abnormality regarding transmission/reception of the message;
a first storage unit (18, 19) configured to store a first counter updated in response to transmission of the message and initialized at a time when the abnormality detection unit detects the abnormality, a second counter updated at a time when the abnormality detection unit detects the abnormality, and a key; and
a verification information generation unit (16) configured to generate a first authentication code, using the key, for data to be verified, including a value of the first counter and a value of the second counter,
the first communication unit transmits the message including the first authentication code generated by the verification information generation unit, and
the second arithmetic device includes:
a second communication unit configured to receive the message including the first authentication code;
a second storage unit configured to store the key; and
a message verification unit configured to generate a second authentication code, using the key, for data to be verified including data excluding at least the first authentication code from the message received by the second communication unit, a third counter value updated in response to reception of the message and initialized at a time when the abnormality occurs, and a fourth counter value updated at a time when the abnormality occurs, and to verify the message according to whether the first authentication code and the second authentication code match.

11. An authentication method executed in a first arithmetic device (1) and a second arithmetic device (1) connected by a network (2), the method comprising:
by the first arithmetic device (1):
including a first storage unit (18,19) configured to store a first counter updated in response to transmission of a message and initialized at a time when an abnormality regarding transmission/reception of the message is detected, a second counter updated at a time when an abnormality regarding transmission/reception of the message is detected, and a key,
generating a first authentication code, using the key, for first data to be verified, including a value of the first counter and a value of the second counter; and
transmitting the message including the generated first authentication code; and
by the second arithmetic device (1):
including a second storage unit (18,19) configured to store the key,
receiving the message including the first authentication code; and
generating a second authentication code, using:
the key, for second data to be verified including data excluding at least the first authentication code from the received message;
a third counter value updated in response to reception of the message and initialized at a time when the abnormality regarding transmission/reception of the message occurs; and
a fourth counter value updated at a time when the abnormality occurs;
the method including verifying the message according to whether the first authentication code and the second authentication code match.

## Patentansprüche

1. Arithmetikvorrichtung (1), die Folgendes umfasst:
eine Kommunikationseinheit (10), die konfiguriert ist, um eine Nachricht zu empfangen, die einen Empfangsauthentifizierungscode umfasst;
eine Speichereinheit (18, 19), die konfiguriert ist, um einen Schlüssel zu speichern; und
eine Nachrichtenverifizierungseinheit (16), die konfiguriert ist, um unter Verwendung von Folgendem einen Erzeugungsauthentifizierungscode zu erzeugen:
des Schlüssels für zu verifizierende Daten, die Daten exklusive zumindest des Empfangsauthentifizierungscodes aus der von der Kommunikationseinheit empfangenen Nachricht umfassen;
eines ersten Zählerwerts (191), der als Antwort auf den Empfang der Nachricht aktualisiert wird und zu einem Zeitpunkt initialisiert wird, zu dem eine Anomalie bezüglich der Übertragung/des Empfangs der Nachricht auftritt; und
eines zweiten Zählerwerts (182), der zu einem Zeitpunkt aktualisiert wird, zu dem die Anomalie auftritt;
wobei die Nachrichtenverifizierungseinheit weiters konfiguriert ist, um die Nachricht dahingehend zu verifizieren, ob der Empfangsauthentifizierungscode und der Erzeugungsauthentifizierungscode übereinstimmen.

2. Arithmetikvorrichtung nach Anspruch 1, wobei
die Nachricht den ersten Zählerwert oder den zweiten Zählerwert umfasst,
die Speichereinheit weiters einen ersten Zähler zum Erlangen des ersten Zählerwerts und einen zweiten Zähler zum Erlangen des zweiten Zählerwerts speichert,
die Nachrichtenverifizierungseinheit den Erzeugungsauthentifizierungscode unter Verwendung des ersten Zählerwerts, der in der von der Kommunikationseinheit empfangenen Nachricht umfasst ist, und des zweiten Zählerwerts, der vom zweiten Zähler erlangt wird, wenn der erste Zählerwert in der von der Kommunikationseinheit empfangenen Nachricht umfasst ist, erzeugt, und
die Nachrichtenverifizierungseinheit den Erzeugungsauthentifizierungscode unter Verwendung des ersten Zählerwerts, der vom ersten Zähler erlangt wird, und des zweiten Zählerwerts, der in der von der Kommunikationseinheit empfangenen Nachricht umfasst ist, wenn der zweite Zählerwert in der von der Kommunikationseinheit empfangenen Nachricht umfasst ist, erzeugt.

3. Arithmetikvorrichtung nach Anspruch 2, die weiters Folgendes umfasst:
eine Neuheitsverifizierungseinheit, die konfiguriert ist, um zu bestimmen, ob der erste Zählerwert oder der zweite Zählerwert, die in der Nachricht umfasst sind, neuer sind als ein Wert des ersten Zählers bzw. ein Wert des zweiten Zählers, die in der Speichereinheit gespeichert sind, wobei
die Nachrichtenverifizierungseinheit den Erzeugungsauthentifizierungscode erzeugt, wenn die Neuheitsverifizierungseinheit bestimmt, dass der erste Zählerwert oder der zweite Zählerwert, die in der Nachrichten umfasst sind, neuer sind als der Wert des ersten Zählers oder der Wert des zweiten Zählers, die in der Speichereinheit gespeichert sind.

4. Arithmetikvorrichtung nach Anspruch 3, die weiters Folgendes umfasst:
eine Synchronisierungsverarbeitungssteuereinheit, die konfiguriert ist, um den Wert des ersten Zählers oder den Wert des zweiten Zählers, die in der Speichereinheit gespeichert sind, mit dem ersten Zählerwert oder dem zweiten Zählerwert, die in der Nachricht umfasst sind, zu vergleichen, wenn die Neuheitsverifizierungseinheit bestimmt, dass der erste Zählerwert oder der zweite Zählerwert, die in der Nachricht umfasst sind, neuer sind als der Wert des ersten Zählers oder der Wert des zweiten Zählers, die in der Speichereinheit gespeichert sind.

5. Arithmetikvorrichtung nach Anspruch 1, wobei
die Speichereinheit weiters einen ersten Zähler zum Erlangen des ersten Zählerwerts und einen zweiten Zähler zum Erlangen des zweiten Zählerwerts speichert und
die Nachrichtenverifizierungseinheit den Erzeugungsauthentifizierungscode unter Verwendung des ersten, vom ersten Zähler erlangten Zählerwerts und des zweiten, vom zweiten Zähler erlangten Zählerwerts erzeugt.

6. Arithmetikvorrichtung (1), die Folgendes umfasst:
eine Kommunikationseinheit (10), die konfiguriert ist, um eine Nachricht zu übertragen;
eine Anomaliendetektionseinheit (11), die konfiguriert ist, um eine Anomalie bezüglich der Übertragung/des Empfangs der Nachricht zu detektieren;
eine Speichereinheit (18, 19), die konfiguriert ist, um einen ersten Zählerwert, der als Antwort auf eine Übertragung der Nachricht aktualisiert wird und zu einem Zeitpunkt initialisiert wird, zu dem die Anomaliendetektionseinheit die Anomalie detektiert, einen zweiten Zählerwert, der zu einem Zeitpunkt aktualisiert wird, zu dem die Anomaliendetektionseinheit die Anomalie detektiert, und einen Schlüssel zu speichern; und
eine Verifizierungsinformationenerzeugungseinheit (16), die konfiguriert ist, um unter Verwendung des Schlüssels für zu verifizierende Daten, die einen Wert des ersten Zählers und einen Wert des zweiten Zählers umfassen, einen Erzeugungsauthentifizierungscode zu erzeugen, wobei
die Kommunikationseinheit die Nachricht überträgt, die den von der Verifizierungsinformationenerzeugungseinheit erzeugten Erzeugungsauthentifizierungscode umfasst.

7. Arithmetikvorrichtung nach Anspruch 6, wobei
die Kommunikationseinheit
die Nachricht, die den Wert des zweiten Zählers zusätzlich zum Erzeugungsauthentifizierungscode umfasst, überträgt, wenn die Anomaliendetektionseinheit die Anomalie detektiert, und
die Nachricht, die den Wert des ersten Zählers zusätzlich zum Erzeugungsauthentifizierungscode umfasst, überträgt, wenn die Anomaliendetektionseinheit die Anomalie nicht detektiert.

8. Arithmetikvorrichtung nach einem der Ansprüche 2, 5 und 6, wobei
die Speichereinheit einen flüchtigen Speicher und einen nichtflüchtigen Speicher umfasst, und
der erste Zählerwert im flüchtigen Speicher gespeichert ist und der zweite Zählerwert im nichtflüchtigen Speicher gespeichert ist.

9. Arithmetikvorrichtung nach Anspruch 6, wobei
die Kommunikationsvorrichtung eine Nachricht empfängt, die einen Empfangsauthentifizierungscode umfasst, und
eine Nachrichtenverifizierungseinheit, die konfiguriert ist, um einen Authentifizierungscode unter Verwendung des Schlüssels für zu verifizierende Daten, die Daten exklusive zumindest des Empfangsauthentifizierungscodes aus der von der Kommunikationseinheit empfangenen Nachricht umfassen, eines ersten Zählerwerts, der als Antwort auf einen Empfang der Nachricht aktualisiert wird und zu einem Zeitpunkt initialisiert wird, zu dem eine Anomalie bezüglich der Übertragung/des Empfangs der Nachricht auftritt, und eines zweiten Zählerwerts, der zu einem Zeitpunkt aktualisiert wird, zu dem die Anomalie auftritt, zu erzeugen und die Nachricht dahingehend zu verifizieren, ob der Empfangsauthentifizierungscode und der Erzeugungsauthentifizierungscode übereinstimmen, ebenfalls umfasst ist, und
die Anomaliendetektionseinheit bestimmt, dass die Anomalie detektiert wird, wenn die Nachrichtenverifizierungseinheit bestimmt, dass der Empfangsauthentifizierungscode und der Erzeugungsauthentifizierungscode übereinstimmen.

10. Authentifizierungssystem, das eine erste Arithmetikvorrichtung (1) und eine zweite Arithmetikvorrichtung (1) umfasst, die über ein Netzwerk verbunden sind, wobei
die erste Arithmetikvorrichtung (1) Folgendes umfasst:
eine erste Kommunikationseinheit (10), die konfiguriert ist, um eine Nachricht zu übertragen;
eine Anomaliendetektionseinheit (11), die konfiguriert ist, um eine Anomalie bezüglich der Übertragung/des Empfangs der Nachricht zu detektieren;
eine erste Speichereinheit (18, 19), die konfiguriert ist, um einen ersten Zähler, der als Antwort auf eine Übertragung der Nachricht aktualisiert wird und zu einem Zeitpunkt initialisiert wird, zu dem die Anomaliendetektionseinheit die Anomalie detektiert, einen zweiten Zähler, der zu einem Zeitpunkt aktualisiert wird, zu dem die Anomaliendetektionseinheit die Anomalie detektiert, und einen Schlüssel zu speichern; und
eine Verifizierungsinformationenerzeugungseinheit (16), die konfiguriert ist, um unter Verwendung des Schlüssels für zu verifizierende Daten, die einen Werts des ersten Zählers und einen Wert des zweiten Zählers umfassen, einen ersten Erzeugungsauthentifizierungscode zu erzeugen,
wobei die Kommunikationseinheit die Nachricht überträgt, die den von der Verifizierungsinformationenerzeugungseinheit erzeugten ersten Erzeugungsauthentifizierungscode umfasst, und
die zweite Arithmetikvorrichtung Folgendes umfasst:
eine zweite Kommunikationseinheit, die konfiguriert ist, um die Nachricht zu empfangen, die den ersten Authentifizierungscode umfasst;
eine zweite Speichereinheit, die konfiguriert ist, um den Schlüssel zu speichern; und
eine Nachrichtenverifizierungseinheit, die konfiguriert ist, um einen zweiten Authentifizierungscode unter Verwendung des Schlüssels für zu verifizierende Daten, die Daten exklusive zumindest des ersten Authentifizierungscodes aus der von der zweiten Kommunikationseinheit empfangenen Nachricht umfassen, eines dritten Zählerwerts, der als Antwort auf den Empfang der Nachricht aktualisiert wird und zu einem Zeitpunkt initialisiert wird, zu dem die Anomalie auftritt, und eines vierten Zählerwerts, der zu einem Zeitpunkt aktualisiert wird, zu dem die Anomalie auftritt, zu erzeugen und die Nachricht dahingehend zu verifizieren, ob der erste Authentifizierungscode und der zweite Authentifizierungscode übereinstimmen.

11. Authentifizierungsverfahren, das in einer ersten Arithmetikvorrichtung (1) und in einer zweiten Arithmetikvorrichtung (1) ausgeführt wird, die über ein Netzwerk (2) verbunden sind, wobei das Verfahren Folgendes umfasst:
durch die erste Arithmetikvorrichtung (1):
umfassend eine erste Speichereinheit (18, 19), die konfiguriert ist, um einen ersten Zählerwert, der als Antwort auf eine Übertragung einer Nachricht aktualisiert wird und zu einem Zeitpunkt initialisiert wird, zu dem eine Anomalie bezüglich Übertragung/Empfang der Nachricht detektiert wird, einen zweiten Zählerwert, der zu einem Zeitpunkt aktualisiert wird, zu dem eine Anomalie bezüglich Übertragung/Empfang der Nachricht detektiert wird, und einen Schlüssel zu speichern,
Erzeugen eines ersten Authentifizierungscodes unter Verwendung des Schlüssels für erste zu verifizierende Daten, die einen Wert des ersten Zählers und einen Wert des zweiten Zählers umfassen; und
Übertragen der Nachricht, die den erzeugten ersten Authentifizierungscode umfasst; und
durch die zweite Arithmetikvorrichtung (1):
umfassend eine zweite Speichereinheit (18, 19), die konfiguriert ist, um den Schlüssel zu speichern,
Empfangen der Nachricht, die den ersten Authentifizierungscode umfasst; und
Erzeugen eines zweiten Authentifizierungscodes unter Verwendung:
des Schlüssels für zweite zu verifizierende Daten, die Daten exklusive zumindest des ersten Authentifizierungscodes aus der empfangenen Nachricht umfassen;
eines dritten Zählerwerts, der als Antwort auf den Empfang der Nachricht aktualisiert und zu einem Zeitpunkt initialisiert wird, zu dem die Anomalie bezüglich Übertragung/Empfang der Nachricht auftritt; und
eines vierten Zählerwerts, der zu einem Zeitpunkt aktualisiert wird, zu dem die Anomalie auftritt;
wobei das Verfahren das Verifizieren der Nachricht dahingehend umfasst, ob der erste Authentifizierungscode und der zweite Authentifizierungscode übereinstimmen.

## Revendications

1. Dispositif arithmétique (1) comprenant :
une unité de communication (10) configurée de manière à recevoir un message incluant un code d'authentification de réception ;
une unité de stockage (18, 19) configurée de manière à stocker une clé ; et
une unité de vérification de message (16) configurée de manière à générer un code d'authentification de génération, en utilisant :
la clé, pour des données à vérifier, incluant des données excluant au moins le code d'authentification de réception du message reçu par l'unité de communication ;
une première valeur de compteur (191) mise à jour en réponse à la réception du message et initialisée à un instant où se produit une anomalie concernant la transmission/réception du message ; et
une deuxième valeur de compteur (182) mise à jour à un instant se produit où l'anomalie ;
l'unité de vérification de message étant en outre configurée de manière à vérifier le message selon que le code d'authentification de réception et le code d'authentification de génération correspondent.

2. Dispositif arithmétique selon la revendication 1, dans lequel :
le message inclut la première valeur de compteur ou la deuxième valeur de compteur ;
l'unité de stockage stocke en outre un premier compteur destiné à acquérir la première valeur de compteur et un second compteur destiné à acquérir la deuxième valeur de compteur ;
l'unité de vérification de message génère le code d'authentification de génération, en utilisant la première valeur de compteur incluse dans le message reçu par l'unité de communication, et la deuxième valeur de compteur acquise auprès du second compteur, dans le cas où la première valeur de compteur est incluse dans le message reçu par l'unité de communication ; et
l'unité de vérification de message génère le code d'authentification de génération, en utilisant la première valeur de compteur acquise auprès du premier compteur, et la deuxième valeur de compteur incluse dans le message reçu par l'unité de communication, dans le cas où la deuxième valeur de compteur est incluse dans le message reçu par l'unité de communication.

3. Dispositif arithmétique selon la revendication 2, comprenant en outre :
une unité de vérification d'ancienneté configurée de manière à déterminer si la première valeur de compteur ou la deuxième valeur de compteur incluse dans le message est plus récente qu'une valeur du premier compteur ou qu'une valeur du second compteur stocké dans l'unité de stockage, respectivement, dans lequel :
l'unité de vérification de message génère le code d'authentification de génération lorsque l'unité de vérification d'ancienneté détermine que la première valeur de compteur ou la deuxième valeur de compteur incluse dans le message est plus récente que la valeur du premier compteur ou que la valeur du second compteur stocké dans l'unité de stockage.

4. Dispositif arithmétique selon la revendication 3, comprenant en outre :
une unité de commande de traitement de synchronisation configurée de manière à mettre à jour la valeur du premier compteur ou la valeur du second compteur stocké dans l'unité de stockage, avec la première valeur de compteur ou la deuxième valeur de compteur incluse dans le message, lorsque l'unité de vérification d'ancienneté détermine que la première valeur de compteur ou la deuxième valeur de compteur incluse dans le message est plus récente que la valeur du premier compteur ou que la valeur du second compteur stocké dans l'unité de stockage.

5. Dispositif arithmétique selon la revendication 1, dans lequel :
l'unité de stockage stocke en outre un premier compteur destiné à acquérir la première valeur de compteur et un second compteur destiné à acquérir la deuxième valeur de compteur ; et
l'unité de vérification de message génère le code d'authentification de génération, en utilisant la première valeur de compteur acquise auprès du premier compteur et la deuxième valeur de compteur acquise auprès du second compteur.

6. Dispositif arithmétique (1) comprenant :
une unité de communication (10) configurée de manière à transmettre un message ;
une unité de détection d'anomalie (11) configurée de manière à détecter une anomalie concernant la transmission/réception du message ;
une unité de stockage (18, 19) configurée de manière à stocker un premier compteur mis à jour en réponse à une transmission du message et initialisé à un instant où l'unité de détection d'anomalie détecte l'anomalie, un second compteur mis à jour à un instant où l'unité de détection d'anomalie détecte l'anomalie, et une clé ; et
une unité de génération d'informations de vérification (16) configurée de manière à générer un code d'authentification de génération, en utilisant la clé, pour des données à vérifier, incluant une valeur du premier compteur et une valeur du second compteur, dans lequel
l'unité de communication transmet le message incluant le code d'authentification de génération généré par l'unité de génération d'informations de vérification.

7. Dispositif arithmétique selon la revendication 6, dans lequel :
l'unité de communication
transmet le message incluant la valeur du second compteur, outre le code d'authentification de génération, dans le cas où l'unité de détection d'anomalie détecte l'anomalie ; et
transmet le message incluant la valeur du premier compteur, outre le code d'authentification de génération, dans le cas où l'unité de détection d'anomalie ne détecte pas l'anomalie.

8. Dispositif arithmétique selon l'une quelconque des revendications 2, 5 et 6, dans lequel :
l'unité de stockage inclut une mémoire volatile et une mémoire non volatile ; et
le premier compteur est stocké dans la mémoire volatile, et le second compteur est stocké dans la mémoire non volatile.

9. Dispositif arithmétique selon la revendication 6, dans lequel :
l'unité de communication reçoit un message incluant un code d'authentification de réception ; et
une unité de vérification de message configurée de manière à générer un code d'authentification, en utilisant la clé, pour des données à vérifier, incluant des données excluant au moins le code d'authentification de réception, du message reçu par l'unité de communication, une première valeur de compteur mise à jour en réponse à la réception du message et initialisée à un instant où se produit une anomalie concernant la transmission/réception du message, et une deuxième valeur de compteur mise à jour à un instant se produit où l'anomalie, et à vérifier le message selon que le code d'authentification de réception et le code d'authentification de génération correspondent, est incluse ; et
l'unité de détection d'anomalie détermine que l'anomalie est détectée lorsque l'unité de vérification de message détermine que le code d'authentification de réception et le code d'authentification de génération correspondent.

10. Système d'authentification comprenant un premier dispositif arithmétique (1) et un second dispositif arithmétique (1) connectés par un réseau, dans lequel :
le premier dispositif arithmétique (1) inclut :
une première unité de communication (10) configurée de manière à transmettre un message ;
une unité de détection d'anomalie (11) configurée de manière à détecter une anomalie concernant la transmission/réception du message ;
une première unité de stockage (18, 19) configurée de manière à stocker un premier compteur mis à jour en réponse à la transmission du message et initialisé à un instant où l'unité de détection d'anomalie détecte l'anomalie, un second compteur mis à jour à un instant où l'unité de détection d'anomalie détecte l'anomalie, et une clé ; et
une unité de génération d'informations de vérification (16) configurée de manière à générer un premier code d'authentification, en utilisant la clé, pour des données à vérifier, incluant une valeur du premier compteur et une valeur du second compteur ;
la première unité de communication transmet le message incluant le premier code d'authentification généré par l'unité de génération d'informations de vérification ; et
le second dispositif arithmétique inclut :
une seconde unité de communication configurée de manière à recevoir le message incluant le premier code d'authentification ;
une seconde unité de stockage configurée de manière à stocker la clé ; et
une unité de vérification de message configurée de manière à générer un second code d'authentification, en utilisant la clé, pour des données à vérifier, incluant des données excluant au moins le premier code d'authentification, du message reçu par la seconde unité de communication, une troisième valeur de compteur mise à jour en réponse à la réception du message et initialisée à un instant se produit où l'anomalie, et une quatrième valeur de compteur mise à jour à un instant se produit où l'anomalie, et à vérifier le message selon que le premier code d'authentification et le second code d'authentification correspondent.

11. Procédé d'authentification exécuté dans un premier dispositif arithmétique (1) et un second dispositif arithmétique (1) connectés par un réseau (2), le procédé comprenant les étapes ci-dessous consistant à :
par le biais du premier dispositif arithmétique (1) :
inclure une première unité de stockage (18, 19) configurée de manière à stocker un premier compteur mis à jour en réponse à la transmission d'un message et initialisé à un instant où une anomalie concernant la transmission/réception du message est détectée, un second compteur mis à jour à un instant où une anomalie concernant la transmission/réception du message est détectée, et une clé ;
générer un premier code d'authentification, en utilisant la clé, pour des premières données à vérifier, incluant une valeur du premier compteur et une valeur du second compteur ; et
transmettre le message incluant le premier code d'authentification généré ; et
par le biais du second dispositif arithmétique (1) :
inclure une seconde unité de stockage (18, 19) configurée de manière à stocker la clé ;
recevoir le message incluant le premier code d'authentification ; et
générer un second code d'authentification, en utilisant :
la clé, pour des secondes données à vérifier, incluant des données excluant au moins le premier code d'authentification, du message reçu ;
une troisième valeur de compteur mise à jour en réponse à la réception du message et initialisée à un instant où se produit l'anomalie concernant la transmission/réception du message ; et
une quatrième valeur de compteur mise à jour à un instant se produit où l'anomalie ;
le procédé incluant l'étape consistant à vérifier le message selon que le premier code d'authentification et le second code d'authentification correspondent.
